# EUROPEAN PATENT APPLICATION

(11) **EP 1 580 055 A2**
(43) Date of publication of application: **28.09.2005**
(21) Application number: 05006330.4
(22) Date of filing: 23.03.2005
(51) Int. Cl.: B60J 1/20

(54) **Sunshade curtain for motor vehicles and glazed surfaces in general**

(30) Priority: 25.03.2004 IT MI20040128 U
(71) Applicant: ITI INDUSTRIALE S.r.L, I-20016 Pero (Milano) (IT)
(72) Inventor: Schiraldi, Gaetano, 20020 Arese (Milano) (IT)
(74) Representative: Cicogna, Franco

(57) **Abstract**

The present invention relates to a sunshade curtain (1) for motor vehicle windows or glazed surfaces in general, said sunshade curtain including improved clamping means (3) and a sunshade cloth element (2) which can be shaped according to the configuration of the motor vehicle window or glazed surface to which said curtain (1) must be applied said cloth element (2) having surface portions to which are coupled clamping blocks (4,5) including removable clamping means to removably clamp said curtain (1) to said window.

## Description

### BACKGROUND OF THE INVENTION

The present invention relates to a sunshade curtain for motor vehicles and glazed surfaces in general, including improved clamping means.

As is known, a lot of different sunshade curtains to be applied to motor vehicle windows and glazed surfaces in general, and including different clamping means, are already available.

The above mentioned sunshade curtains are made with standardized configurations and sizes.

Thus, prior sunshade curtains cannot be easily fitted to any motor vehicle windows or glazed surfaces, and, moreover, they do not provide a satisfactory protection against sun rays.

### SUMMARY OF THE INVENTION

Accordingly, the aim of the present invention is to overcome the above mentioned problem, by providing a sunshade curtain for motor vehicle windows and glazed surfaces in general, allowing to fully cover the motor vehicle window or glazed surface, while allowing said curtain to be quickly and simply clamped on said motor vehicle window or glazed surface.

Within the scope of the above mentioned aim, a main object of the present invention is to provide such a sunshade curtain which is adapted to assume any desired configurations, as required by an user.

A further object of the present invention is to provide such a sunshade curtain which, owing to its specifically designed construction, is very reliable and safe in operation.

Yet another object of the present invention is to provide such a sunshade curtain which can be easily made starting from easily available elements and materials.

According to one aspect of the present invention, the above mentioned aim and objects, as well as yet other objects, which will become more apparent hereinafter, are achieved by a sunshade curtain for motor vehicle windows or glazed surfaces in general, said sunshade curtain including improved clamping means and being characterized in that said sunshade curtain comprises a sunshade cloth element which can be shaped according to the configuration of the motor vehicle window or glazed surface to which said curtain must be applied, said cloth element being provided, on surface portions thereof, with a plurality of clamping blocks including removable clamping means to removably clamp said sunshade curtain to a said motor vehicle window or glazed surface.

### BRIEF DESCRIPTION OF THE DRAWINGS

Further characteristics and advantages of the present invention will become more apparent hereinafter from the following detailed disclosure of a sunshade curtain for motor vehicle windows and glazed surfaces in general, including improved clamping means, and which is illustrated, by way of an indicative, but not limitative, example in the accompanying drawings, where:

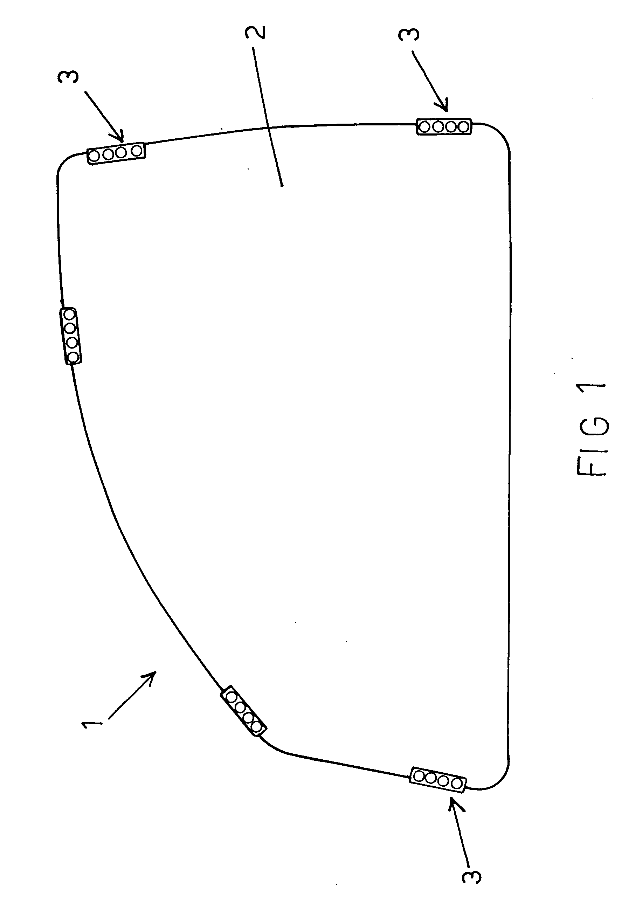

Figure 1 is a schematic view showing a possible configuration of the sunshade curtain according to the present invention;

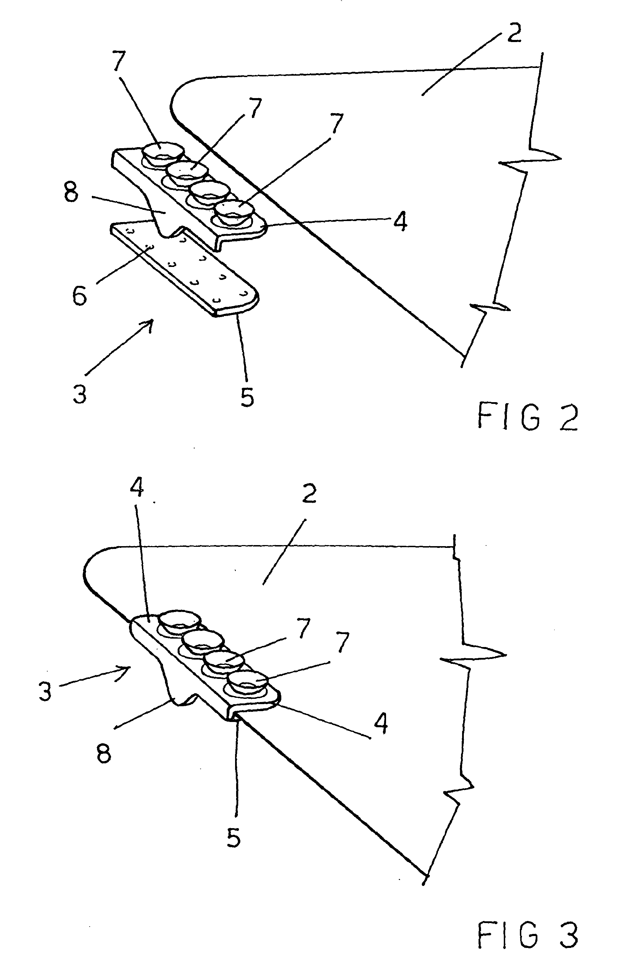

Figure 2 is an exploded perspective view showing a clamping block; and
Figure 3 schematically shows a clamping block applied to a peripheral portion of a cloth element.

### DESCRIPTION OF THE PREFERRED EMBODIMENT

With reference to the number references of the above mentioned figures, the sunshade curtain for motor vehicle windows or glazed surfaces in general, according to the present invention, which has been generally indicated by the reference number 1, comprises a cloth element 2, of the type which is conventionally used for screening sun rays, which can also be of a dimming type.

The above mentioned cloth element has the main feature that it can be directly shaped by the user, so as to cause said cloth element to assume any desired configuration, thereby allowing the window glass to be fully covered.

In particular, for clamping the cloth element 2 to the window glass, clamping blocks are provided, said clamping blocks being generally indicated by the reference number 3, and comprising a plastic material block element 4 and a further or second block element 5, said first block element 4 and second block element 5 being adapted to be mutually coupled so as to clamp therebetween the cloth element 2, to firmly hold it.

More specifically, for providing a firm coupling, latching tooth element 6, adapted to pass between the cloth meshes forming said cloth element 2 are herein provided.

Advantageously, said blocks 3 are arranged at the peripheral portion of the cloth element, depending on the specific configuration to be imparted to said cloth element.

As shown, on the plate 4 of said block elements 3 are provided a plurality of removable clamping means to removably clamp said cloth element to a window glass, said removable clamping means advantageously comprising a plurality of suction cups 7, of a comparatively small diameter, which are arranged in an aligned arrangement, to practically provide a clamping bar element.

The plastic material block 4 supporting said cup elements 7 is advantageously provided with a gripping lug 8, allowing to easily remove said clamping blocks, without damaging the connection of the clamping blocks and cloth element.

If a greater tension of the cloth element 2 should be provided, it would also be possible to provide a cloth element specifically cut to a desired size, including a shaping metal profile element, engaged along all the perimeter of the cloth material, to increase the stiffness of the latter, the clamping system being the same.

From the above disclosure it should be apparent that the invention fully achieves the intended aim and objects.

In fact, the inventive sunshade curtain for motor vehicle windows or glazed surfaces in general comprises improved clamping means and is so designed as to allow its sunshade cloth element to be shaped at will, and to easily removably clamp it to the window, by the disclosed very simple and efficient clamping means.

Said clamping means, in particular, allow the clamping operations to be easily and quickly performed in all the use conditions.

In practicing the invention, the used materials, provided that they are compatible to the intended application, as well as the contingent size and shapes, can be any, depending on requirements.

## Claims

1. A sunshade curtain for motor vehicle windows or glazed surfaces in general, including improved clamping means, **characterized in that** said curtain comprises a sunshade cloth element which can be shaped depending on the configuration of the window thereto said curtain must be applied, said cloth element having surface portions to which are coupled clamping blocks including removable clamping means for removably clamping said curtain to said window.

2. A sunshade curtain according to claim 1, **characterized in that** said clamping blocks are arranged on a peripheral portion of said cloth element.

3. A sunshade curtain according to claim 1, **characterized in that** said clamping blocks are applied to any desired portions of said cloth element.

4. A sunshade curtain according to claim 1, **characterized in that** said removable clamping means comprise a plurality of suction cups.

5. A sunshade curtain according to claim 4, **characterized in that** said plurality of suction cups comprises aligned suction cups.

6. A sunshade curtain according to claim 4,
**characterized in that** said suction cups are arranged in an adjoining relationship.

7. A sunshade curtain according to claim 1, **characterized in that** said clamping blocks comprise a first plastic material block and a second block which can be mutually coupled and clamped on said cloth element.

8. A sunshade curtain according to claim 7, **characterized in that** said plastic material blocks comprise a plurality of latching tooth elements adapted to pass between the meshes of the fabric material forming said cloth element.

9. A sunshade curtain according to claim 4, **characterized in that** said suction cups are arranged on said plate.

10. A sunshade curtain according to claim 9, **characterized in that** said plate comprises a gripping lug.
